# EUROPEAN PATENT APPLICATION

(11) **EP 4 494 802 A1**
(43) Date of publication of application: **22.01.2025**
(21) Application number: 23186119.6
(22) Date of filing: 18.07.2023
(51) Int. Cl.: B23K 26/08, B23K 26/38, B23K 37/053, B23K 101/06

(54) **A TUBE HANDLING SYSTEM FOR A TUBE WORKING MACHINE AND A LASER TUBE WORKING MACHINE COMPRISING SAID TUBE HANDLING SYSTEM**

(71) Applicant: Bystronic Laser AG, 3362 Niederönz (CH)
(72) Inventor: Milani, Mauro, Rovato BS (IT); Fontana, Luca, Ospitaletto BS (IT); Bevilacqua, Gianpiero, Castenedolo BS (IT)
(74) Representative: Perani & Partners S.p.A.

(57) **Abstract**

Tube handling system (1) for a tube working machine (100) configured to pick and load into the tube working machine (100) a tube (T). The tube handling system (1) comprises:
- a supporting frame (2) extending along a longitudinal direction (X-X) between a first end portion (21) and a second end portion (22),
- a first manipulator (3), mounted on the supporting frame (2) at the first end portion (21), which comprises first gripping means (31) configured to grip the tube (T) and first driving means (32) configured to move the first gripping means (31) perpendicularly to the longitudinal direction (X-X), and
- one or more second manipulators (4, 5) slidably mounted on the supporting frame (2) along the longitudinal direction (X-X) between the first manipulator (3) and the second end portion (22).

Wherein each second manipulator (4, 5) comprises second gripping means (41, 51) configured to grip the tube (T), second driving means (42, 52) configured to move the second gripping means (41, 51) perpendicularly to the longitudinal direction (X-X), third driving means (43, 53) configured to drive the second manipulator (4, 5) to let the second manipulator (4, 5) to slide along the longitudinal direction (X-X) on the supporting frame (2) with respect to the first manipulator (3).

## Description

### Technical field

The present invention relates to the field of equipment and components for handling a tube on a tube working machine.

More particularly, the present invention relates to a handling system for a tube working machine which is configured to clamp, support and load into the tube working machine a tube to be worked.

The present invention also relates to a laser tube working machine comprising such tube handling system.

### State of the art

Laser cutting is a well-known technology that uses a laser beam to melt and/or vaporize materials, resulting in a cut edge or an engraving.

This laser cutting technology has been combined with computer numerical control in CNC machines to automate the cutting operations of workpieces such as metal sheets or tubes.

The laser tube working machines comprise a loading station equipped with a tube handling system configured to clamp a tube and feed it to a working station where a laser head is configured to perform cutting operations on the tube.

In detail, the known handling systems comprise several manipulators, such as four or more manipulators, configured to jointly clamp, support and carry a tube to be worked.

Such manipulators are arranged in succession along a longitudinal direction. In use, the manipulators contact respective tube sections to jointly pick, support and load the tube with its axial direction extending along the longitudinal direction.

Each manipulator is equipped with a clamp that can be moved along two axes - z-axis (vertical) and y-axis (horizontal, radial to the tube) - perpendicular to the longitudinal direction.

In detail, the clamp of each manipulator comprises a horizontal support configured to support the tube against gravity and a vertical element configured to laterally contain the tube. The clamping action is obtained by the rotation of the vertical element about a vertical rotation axis of the manipulator which tightens the tube against the structure of the manipulator. The position of the horizontal support during the rotation about the vertical rotation axis of the manipulator is controlled by an encoder mounted on the asynchronous motor in order to clamp tubes with different cross-sections in shape and/or in size.

To handle a wide range of tube lengths, the known handling systems require several manipulators, which disadvantageously increases the complexity and the cost of the tube handling systems.

Moreover, the distance between the manipulators in the longitudinal direction limits the minimum tube length that can be handled by the tube handling system. In fact, a tube that is shorter than the distance between the manipulators in the longitudinal direction cannot be clamped and supported.

Furthermore, a large distance between the manipulators in the longitudinal direction does not allow to properly support tubes with small diameters which, due to their small moment of inertia, are extremely flexible. To handle tubes with small cross-sections, the known handlers must therefore be equipped with a large number of manipulators, which increases the complexity and the cost of the tube handling systems.

In some cases, the known handling systems are also used to measure the length of the tube. In these cases, the handling systems are equipped with specific measuring elements configured to move along the longitudinal direction between the ends of the tube. Therefore, in order to measure the length of the tube, the known machine requires the introduction of a specific moving element that adds complexity and cost.

It has also been experienced that the asynchronous motors used to rotate the horizontal supports during tube clamping do not allow to control the torque applied to tighten the tube, but only the position during the rotation. This can result in damage to the outer surface of the clamped tube or inadequate clamping of the tube. In other words, the known tube handling systems are not able to achieve a reliable clamping action of the tube.

### Scope of the invention

In this context, one object of the present invention is to provide a simple and economical tube handling system for a tube working machine, such as a laser tube cutting machine, capable of handling a wide range of tubes.

Another object of the present invention is to provide a simple and economical laser tube working machine, such as a laser tube cutting machine, adapted to work a wide range of tubes.

### Summary of the invention

The tube handling system for a tube working machine, object of the present invention, is configured to pick up a tube and load it into the tube working machine, in particular into a working station of the tube working machine.

The tube handling system comprises a supporting frame extending along a longitudinal direction between a first and a second end portions, and a first manipulator mounted on the supporting frame at the first end portion.

In detail, the first manipulator comprises first gripping means adapted to grip the tube and first driving means configured to move the first gripping means perpendicular to the longitudinal direction.

The tube handling system further comprises one or more second manipulators arranged spaced apart along the longitudinal direction.

Each second manipulator has second gripping means configured to grip the tube and second driving means configured to move the second gripping means perpendicular to the longitudinal direction. The first and second gripping means are configured to jointly pick up and support the tube with its axial direction extending along the longitudinal direction.

Moreover, each second manipulator is slidably mounted on the supporting frame along the longitudinal direction between the first manipulator and the second end portion and comprises third driving means configured to drive the second manipulator in the longitudinal direction on the supporting frame with respect to the first manipulator.

The mutual movement of the second manipulator with respect to the first manipulator in the longitudinal direction allows the distance between the first and second gripping means to be adapted to the length of the tube. In this way, the tube handling system can load into the working station of the tube working machine a wide range of tube lengths with just two manipulators.

Advantageously, therefore, the present invention allows to provide a simple and economical tube handling system for a tube working machine capable of handling a wide range of tubes regardless of their length.

According to one embodiment, the first manipulator is fixedly mounted on the supporting frame along the longitudinal direction. Therefore, in use, the mutual distance between the first and second manipulators along the longitudinal direction is adapted to the length of the tube simply by moving the one or more second manipulators relative to the first one. This allows the number of moving parts to be minimized, thereby reducing the cost and complexity of the tube handling system.

According to one embodiment, the tube handling system comprises a measuring unit configured to measure the length of the tube along its axial direction. In detail, the measuring unit comprises at least a first measuring sensor, mounted on at least one of the second manipulators, configured to detect a first tube end. Preferably, the first measuring sensor is mounted on the second gripping means of at least one of the second manipulators.

By arranging the first measuring sensor on the second manipulator, the tube handling system can measure the length of the tube taking advantage of the mobility of the second manipulator in the longitudinal direction. This eliminates the need for a separate movable measuring element which, as described above, adds complexity and cost to conventional handling systems.

According to one embodiment, the measuring unit comprises a second measuring sensor mounted on the supporting frame at the first end portion and configured to detect a second tube end. This enables a rapid measurement of the length of the tube by computing the relative position between the second manipulator and the first end potion of the frame when the first and second tube ends are detected by the first and second measuring sensors, respectively.

According to one embodiment, the first driving means are configured to move the first gripping means along a first and a second moving direction perpendicular to the longitudinal direction.

According to one embodiment, the second driving means are configured to move the second gripping means along a third and a fourth moving direction perpendicular to the longitudinal direction.

This two-axis movement of the first and/or second gripping means allows the tube handling system to move the tube perpendicular to its axial direction, e.g. to move the tube from a loading station to a tube supporting system of the laser tube working machine.

According to one embodiment, the first gripping means and/or the second gripping means comprise a main body, a support element pivotally mounted on the main body around a rotation axis, a pin attached to the support element and extending parallel to the direction defined by the rotation axis, and pivoting means configured to drive the support element around the rotation axis to tighten the tube supported by the support element between the main body and the pin.

Preferably, the pivoting means comprises a brushless motor kinematically connected to the support element for driving the support element around the rotation axis. Advantageously, the brushless motor can be controlled to provide a reliable clamping action on the tube to avoid both damage to the tube and undesired slippage of the tube during the movement of the second manipulator in the longitudinal direction.

Moreover, the support element preferably extends transversally to the direction of gravity between a first extremity portion kinematically connected to the pivoting means and a opposite second extremity portion on which the pin is mounted.

According to one embodiment, the first gripping means comprises a roller on which the tube slides when at least one of the second manipulators moves along the longitudinal direction feeding the tube to the tube working machine. Advantageously, the roller prevents damage to the tube surface due to sliding friction as the tube is moved along its axial direction.

According to one embodiment, the one or more second manipulators comprise a plurality of second manipulators arranged in sequence along the longitudinal direction between the first manipulator and the second end portion of the supporting frame. The third driving means of each second manipulator are configured to move the respective second manipulator along the longitudinal direction independently of the other second manipulators. Advantageously, the plurality of second manipulators allows to adequately support tube with very small cross-sections which, due to their small moment of inertia, are prone to bending and therefore require multiple supporting points.

The present invention also relates to a laser tube working machine which has a loading station and a working station. The loading station comprises the aforementioned handling system and is configured to pick a tube to be worked and load it into the working station.

Advantageously, the handling system - which according to the above is simple, economical, and able to load into the working station a wide range of tube sizes - allows to provide a simple and economical laser tube working machine adapted to work a wide range of tube sizes.

### BRIEF DESCRIPTION OF THE DRAWINGS

Further characteristics and advantages of the present invention will appear more clearly from the indicative, and therefore non-limiting, description of a preferred but not exclusive embodiment of the tube handling system and the laser tube working machine as illustrated in the enclosed drawings in which:
- Figure 1 shows a prospective view of a tube handling system of Figure 1 according to the present invention,
- Figure 2 show a prospective view of a portion of the tube handling system of Figure 1;
- Figure 3a shows a prospective view of first gripping means of the tube handling system of Figure 1;
- Figure 3b shows a prospective view of a first embodiment of a second gripping means of the tube handling system of Figure 1;
- Figure 3c shows a prospective view of a second embodiment of the second gripping means of the tube handling system of Figure 1;
- Figure 4a shows a prospective view of the first gripping means of Figure 3a clamping a small diameter tube;
- Figure 4b shows a prospective view of the first gripping means of Figure 3a clamping a big diameter tube;
- Figure 5 shows a schematic top view of a laser tube working machine according to the present invention.

### DETAILED DESCRIPTION

The present invention relates to a tube handling system 1 (hereinafter "handling system 1") for a tube working machine, in particular for a laser tube working machine such as a laser tube cutting machine.

When installed in a loading station 101 of the tube working machine 100, the handling system 1 is configured to pick up a tube T to be worked and to load it into the tube working machine 100.

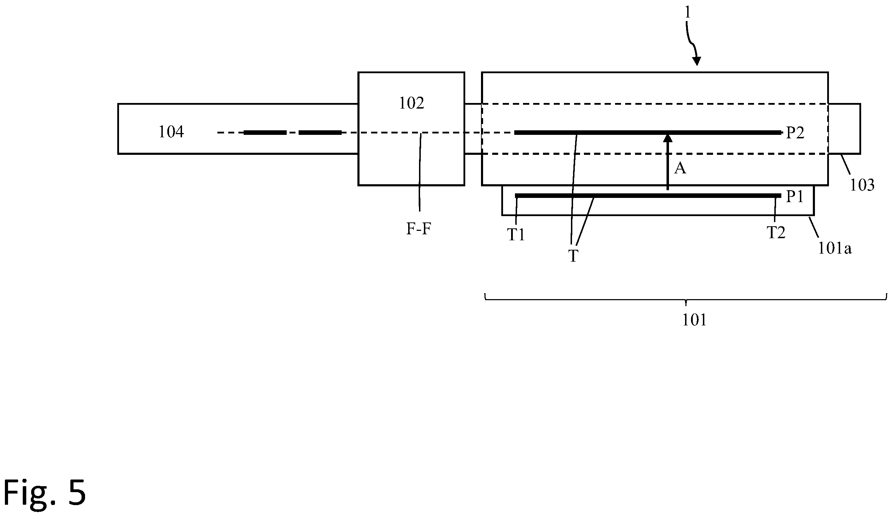

For example, with reference to figure 5, the handling system 1 is configured to pick up a tube T from a singularization apparatus 101a of the loading station 101 and load it onto a supporting system 103 which, during processing, supports and feeds the tube T along a feeding direction F-F to a working station 102.

In the context of the present invention, the term "tube" is used to indicate an elongated structure extending along a tube axial direction X-X between opposite tube ends T1, T2. It is worth specifying that the term "tube" is not limited to pipes - i.e. rounded tube - but it also refers to any elongated structure with, for example, rectangular, squared or oval hollow cross section as well as to profiles with open cross-sections such as C-, U-, V-, X-, T-, H- or cross-shaped profiles.

Referring to figures land 2, the tube handling system 1 comprises a supporting frame 2 extending along a longitudinal direction X-X between a first end portion 21 and a second end portion 22.

When the handling system 1 is installed in the tube working machine 100, the supporting frame 2 is arranged upstream of the working station 102 of the tube working machine 100 along the feeding direction F-F.

Preferably, the supporting frame 2 is configured to be installed in the loading station 101 of the tube working machine 100 with the longitudinal direction X-X aligned along the feeding direction F-F and the first end portion 21 oriented toward the working station 102.

According to one aspect, the first end portion 21 is arranged close to the working station 102 along the feeding direction F-F so that the handling systems 1 can load the tube T with one of the tube ends T1 close to the working station 102. Advantageously, this reduces the processing idle time (i.e. the time between the end of one process activity and the start of the next one).

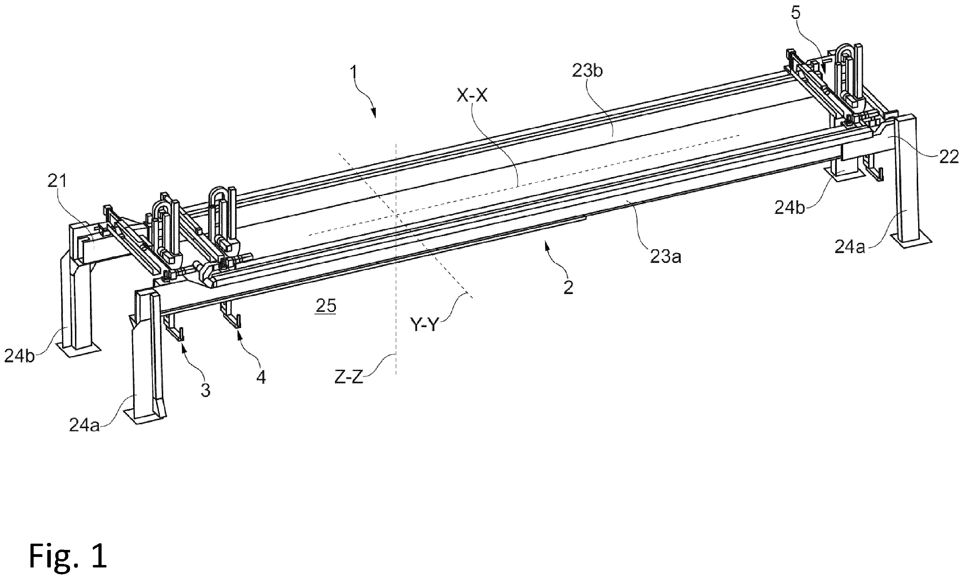

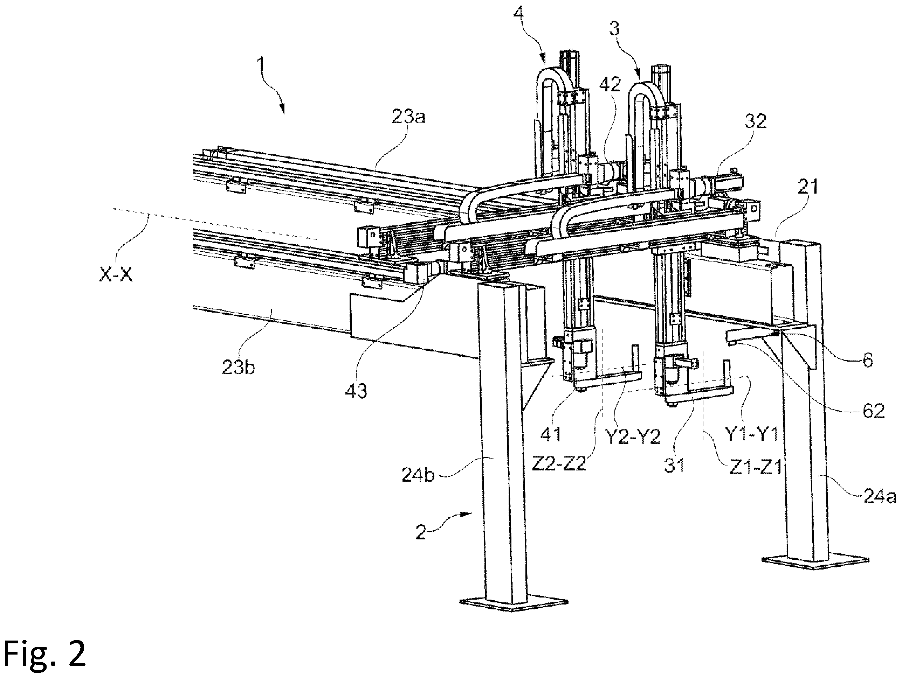

In the embodiment shown in figures 1 and 2, the supporting frame 2 comprises two crossbars 23a, 23b extending parallel to the longitudinal direction X-X between the first and second end potions 21, 22, and two pairs of uprights 24a, 24b, each configured to support a respective crossbar 23a, 23b at a given height form a ground surface (not shown) in a height direction Z-Z.

The crossbars 23a, 23b and the respective uprights 24a, 24b are spaced apart along a transverse direction Y-Y perpendicular to the longitudinal direction X-X.

In the embodiment of figure 5, the supporting system 103 is arranged between the crossbars 23a, 23b and the respective uprights 24a, 24b along the transverse direction Y-Y. Therefore, the supporting frame 2 define an internal region 25 extending along the longitudinal, transverse and height direction X-X, Y-Y, Z-Z that is configured to receive the supporting system 103.

Moreover, always referring to the embodiment shown in figure 6, the singularization apparatus 101a is arranged on one side of the supporting system 103 along the transverse direction Y-Y, in particular below one of the crossbars 23a, 23b of the supporting frame 2 in the height direction Z-Z. Therefore, the supporting frame 2 is configured to receive into the internal region 25 also at least part of the singularization apparatus 101a.

In the context of the present application, a singularization apparatus is a system configured to isolate a tube from a bundle of tubes.

Referring to figure 5, the handling system 1 is preferably configured to pick up the tube T to be worked from the singularization apparatus 101a - or, more generally, from a pick-up region P1 -, to move the tube T along the transverse direction Y-Y, and to unload the tube T on the supporting system 103 of the tube working machine 100 - or, more generally, into a unloading region P2. The movement performed by the handling system 1 is schematically represented in Figure 5 by arrow A.

In alternative embodiments not shown in the accompanying figures, the supporting frame 2 may comprise just one crossbar or more than two crossbars.

Referring to figure 2, the handling system 1 comprises a first manipulator 3 mounted on the supporting frame 2 at the first end portion 21.

The first manipulator 3 has first gripping means 31 adapted to grip the tube T and first driving means 32 configured to move the first gripping means 31 perpendicularly to the longitudinal direction X-X.

In the context of the present invention, the gripping means 31 are system configured to grip a single tube T to perform the pick-up and handling operations described above. Further details of the gripping mean 31 will be provided in a subsequent part of the description.

Preferably, the first driving means 32 are configured to move the first gripping means 31 along a first moving direction Y1-Y1 and a second moving direction Z1-Z1, both perpendicular to the longitudinal direction X-X. In other words, the first driving means 32 are configured to move the first gripping means in a plane normal to the longitudinal direction X-X.

According to one aspect, the first and second moving direction Y1-Y1, Z1-Z1 are parallel to the transversal and height directions Y-Y, Z-Z, respectively.

Moreover, in a preferred embodiment, the first manipulator 3 is fixedly mounted on the supporting frame along the longitudinal direction X-X. Therefore, the relative position of the gripping means 31 with respect to the supporting frame 2 along the longitudinal direction X-X is fixed.

The handling system 1 also comprises one or more second manipulators 4, 5, each of which is slidably mounted on the supporting frame 2 along the longitudinal direction between the first manipulator 3 and the second end portion 22 of the frame 2.

In the embodiment shown in figure 1, the handling system 1 comprises two second manipulators 4, 5 arranged spaced apart along the longitudinal direction X-X. However, in alternative embodiments not shown the in the accompanying figures, the handling system 1 may comprise only one second manipulator 4, or more than two second manipulators.

Each second manipulator 4, 5 comprises second gripping means 41, 51 configured to grip the tube T and second driving means 42, 52 configured to move the second gripping means 41, 51 perpendicularly to the longitudinal direction X-X.

The first gripping means 31 and the second gripping means 41, 51 are configured to jointly pick up and support the tube T with the axial direction A-A extending parallel to the longitudinal direction X-X.

Preferably, the second driving means 42, 52 are configured to move the second gripping means 41, 51 along a third moving direction Y2-Y2 and a fourth moving direction Z2-Z2, both perpendicular to the longitudinal direction X-X. In other words, the second driving means 42, 52 are configured to move the second gripping means 41, 51 in a plane normal to the longitudinal direction X-X.

According to one aspect shown in figure 2, the third and fourth moving directions Y2-Y2, Z2-Z2 are parallel to the first and second moving directions Y1-Y1, Z1-Z1, respectively.

Preferably, the first and second driving means 32, 42, 52 are configured to move the first and second gripping means 31, 41, 51 in a synchronous way along the respective moving directions Y1-Y1, Z1-Z1, Y2-Y2, Z2-Z2 to perform the handling operations described above.

According to another aspect, the third and fourth moving direction Y2-Y2, Z2-Z2 are parallel to the transverse and height direction Y-Y, Z-Z, respectively.

Combining the movements along the respective moving direction Y1-Y1, Z1-Z1, Y2-Y2, Z2-Z2, the first and second gripping means 31, 41, 51 are configured to move between the pick-up region P1 (e.g. singularization apparatus 101a) and the unloading region P2 (e.g. supporting system 103) in order to pick up the tube to be worked and to load it into the tube working station of the working machine 100.

Each second manipulator 4, 5 also comprises third driving means 43, 53 configured to drive the second manipulator 4, 5 to let the second manipulator 4, 5 to slide along the longitudinal direction X-X on the supporting frame 2 with respect to the first manipulator 3.

The mutual movement of the second manipulators 4, 5 with respect to the first manipulator 3 in the longitudinal direction X-X allows the distance between the first and second gripping means 31, 41, 51 to be adapted to the length of the tube T.

Moreover, the mutual movement of the second manipulators 4, 5 with respect to the first manipulator 3 allows to adjust the distance between the first and second gripping means 31, 41, 51 in the longitudinal direction X-X according to the cross-section of the tube T. In this way, the handling system 1 according to the present invention allows to provide closer supporting points along the axial direction A-A to tubes with small cross-sections which, due to their small moment of inertia, are prone to bending.

In the embodiment with two or more second manipulators 4, 5 arranged in succession along the longitudinal direction X-X between the first manipulator 3 and the second end portion 22, the third driving means 43, 53 of each second manipulator 4, 5 are configured to move the respective second manipulator 4, 5 along the longitudinal direction X-X independently of the other second manipulators 4, 5.

Referring to the embodiment shown in figures 1 and 2, the first and second manipulators 3, 4, 5 are slidably mounted on the crossbars 23a, 23b of the supporting frame 2.

In detail, when the handling system 1 is installed in the tube working machine 100, the crossbars 23a, 23b support the first and second manipulators 3, 4, 5 arranging the respective first and second gripping means 31, 41, 51 above the supporting system 103 along the height direction Z-Z.

Preferably, the first and second manipulators 3, 4, 5 are arranged between the crossbars 23a, 23b along the transverse direction Y-Y.

Moreover, in order to move the respective first and second gripping means 31, 41, 51 perpendicularly to the longitudinal direction X-X (e.g. along the first, second, third, fourth moving direction Y1-Y1, Z1-Z1, Y2-Y2, Z2-Z2 mentioned above), the first and second driving means 32, 42, 52 are preferably configured to move the first and second manipulators 3, 4, 5 along the transverse direction Y-Y and/or along the height direction Z-Z with respect to the crossbars 23a, 23b.

Preferably, the first and second driving means 32, 42, 52 comprises brushless motors (not shown) with an integrated encoder (not shown) configured to control the position of the gripping means 31, 41, 51.

According to one embodiment, the first and second driving means 32, 42, 52 are two-axis cartesian robots on which the first and second gripping means 31, 41, 51 are mounted to be moved perpendicularly to the longitudinal direction X-X.

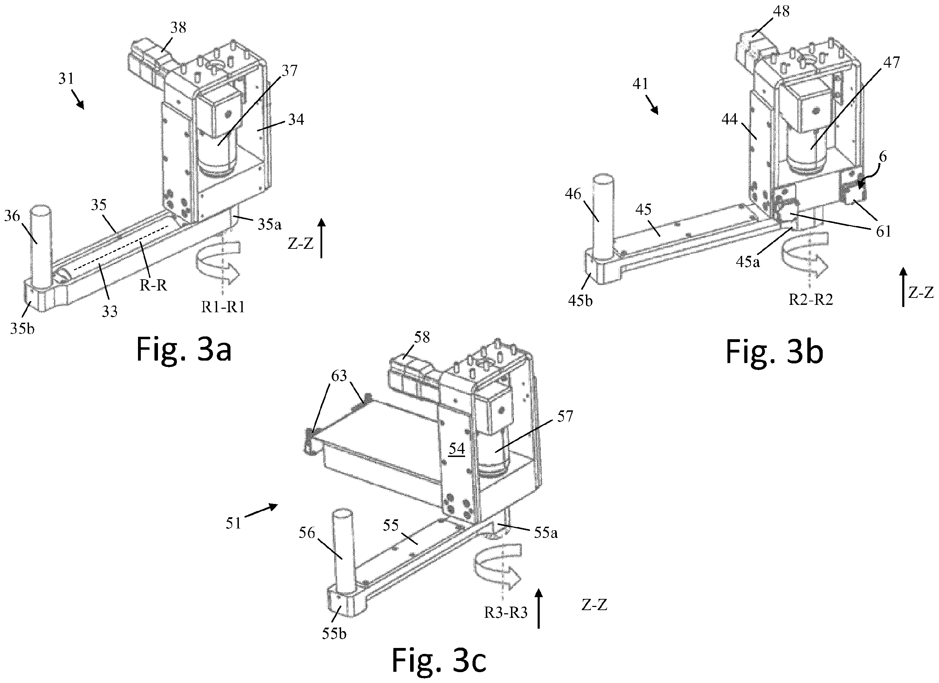

Some embodiments of the first and second gripping means 31, 41, 51 are shown in figures 3a, 3b and 3c.

More particularly, in the embodiments of figures 3a, 3b and 3c, the first and/or second gripping means 31, 41, 51 comprise a main body 34, 44, 54 on which the first/second driving means 32, 42, 52 are configured to act to move the first/second gripping means 41, 51 perpendicularly to the longitudinal direction X-X.

Always with reference to the embodiments shown in figures 3a, 3b and 3c, the first and/or second gripping means 31, 41, 51 further comprise a support element 35, 45, 55 mounted on the main body 34, 44, 54, a pin 36, 46, 56 attached to the support element 35, 45, 55, and pivoting means 37, 47, 57 configured to act on the support element 35, 45, 55.

In detail, the support element 35, 45, 55 is pivotally mounted on the main body 34, 44, 54 around a rotation axis R1-R1, R2-R2, R3-R3 and the pivoting means 37, 47, 57 are configured to drive the support element 35, 45, 55 around the rotation axis R1-R1, R2-R2, R3-R3.

The support element 35, 45, 55 and the pin 36, 46, 56 extend mainly transversely and parallel to the rotation axis R1-R1, R2-R2, R3-R3, respectively.

Preferably, the support element 35, 45, 55 extends transversely, in particular perpendicularly, to the direction of action of gravity (vertical direction Z-Z) between a first extremity portion 35a, 45a, 55a kinematically connected to the pivoting means 37, 47, 57 and a second extremity portion 35b, 45b, 55b on which the pin 36, 46, 56 is mounted.

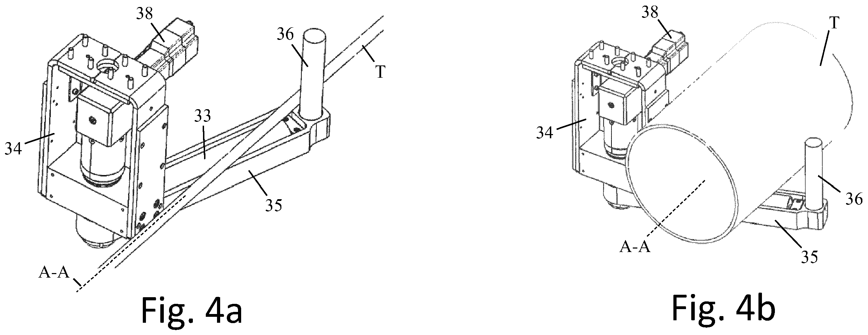

Referring to figure 4a and 4b, in use, when the tube T is arranged on the support element 35, 45, 55 between the main body 34, 44, 54 and the pin 36, 46, 56, the pivoting means 37, 47, 57 dive the support element 35, 45, 55 around the rotation axis R1-R1, R2-R2, R3-R3 in a clamping direction to clamp the supported tube T between the main body 34, 44, 54 and the pin 36, 46, 56. Similarly, to release (unclamp) the supported tube T, the pivoting means 37, 47, 57 pivot the support element 35, 45, 55 around the rotation axis R1-R1, R2-R2, R3-R3 in a release direction opposite to the clamping direction.

Preferably, the pivoting means 37, 47, 57 comprises a brushless motor 38, 48, 58 kinematically connected to the support element 35, 45, 55 for driving the support element 35, 45, 55 around the rotation axis R1-R1, R2-R2, R3-R3 in the clamping and release direction of rotation.

Always with reference to figures 4a and 4b, it should be noted that the gripping means 31, 41, 51 described above can be used to clamp tubes T with different cross-section by simply modifying the angle that the support element 35, 45, 55 swivel around the rotation axis R1-R1, R2-R2, R3-R3 to clamp the tube.

Preferably, the first gripping means 31 of the first manipulator 3 comprises a roller 33 on which the supported tube T slides upon the motion of the at least one of the second manipulator 4, 5 along the longitudinal direction X-X.

In the embodiment of figure 3a, the roller 33 is arranged on the support element 35, 45, 55, preferably extending between the first extremity portion 35a, 45a, 55a the second extremity portion 35b, 45b, 55b.

The roller 33 has a rolling axis R-R that, preferably, is oriented along the direction that connects the first extremity portion 35a, 45a, 55a the second extremity portion 35b, 45b, 55b.

In one embodiment, the handling system 1 is configured to measure the length of the handled tube T. In detail, in this embodiment, the handling system 1 comprises a measuring unit 6 configured to measure the extension of the tube along the axial direction A-A when the tube is supported by the first and second gripping means 31, 41, 51.

The measuring unit 6 comprises a first measuring sensor 61 mounted on at least one of the second manipulators 4, 5 and configured to detect a first tube end T1.

Referring to figure 3b, the first measuring sensor 61 is preferably mounted on the second gripping means 41 of at least one of the second manipulators 4. In particular, in the embodiment of figure 3b, the first measuring sensor 61 is arranged on the main body 34, 44, 54 of the gripping means 41 so as to face the supported tube T.

For example, the first measuring sensors 61 is a optoelectronic sensor, particular based on triangulation, i.e. a sensor able to sense the object that is some centimeters far away, or flying time sensor based. These sensors are well known and commercially available, so they will not be described further.

During the measurement of the length of the tube T, the second manipulator 4, 5, on which the first measuring sensor 61 is arranged, moves along the axial direction of the tube till the latter detects the first tube end T1.

Preferably, the measuring unit 6 comprises a second measuring sensor 62 mounted on the supporting frame 2, in particular at the first end portion 21, and configured to detect a second tube end T2 opposite to the first one T1.

The second measuring sensor 62 is, for example, a optoelectronic sensor, in particular a reflective optoelectronic sensor, or triangulation or flying time sensor.

In use, once the first tube end T1 has been detected by the first measuring sensor 61, the tube T is moved by the second manipulator 4, 5 along the longitudinal direction X-X towards the first end portion 21 until the second measuring sensor 62 detects the second tube end T2.

The measure of the length of the tube is then obtained by calculating the difference between the positions of the first and second tube ends T1, T2.

It is also object of the present invention a laser tube working machine, in particular a laser tube cutting machine, configured to work a wide range of tubes T.

In particular, with reference to figure 5, the laser tube working machine 100 comprises a working station 102 configured to work the tube T and loading station 101 configured to pick up a tube T and provide it to the working station 102.

The loading station 101 comprises the handling system 1 described above and, preferably, the singularization apparatus 101a.

The working station 102 comprises a laser working head (not shown) adapted to generate an engraving/cutting laser beam and a supporting system 103 configured to support and feed the tube T to the working station 102 during working operations.

Those skilled in the art will obviously appreciate that several changes and variants may be made to the arrangements as described hereinbefore to meet incidental and specific needs. All these variants and changes fall within the scope of the invention, as defined in the following claims.

## Claims

1. A tube handling system (1) for a tube working machine (100), the tube handling system (1) being configured to pick and load into the tube working machine (100) a tube (T) extending along an axial direction (A-A), the tube handling system (1) comprising:
- a supporting frame (2) extending along a longitudinal direction (X-X) between a first end portion (21) and a second end portion (22),
- a first manipulator (3) mounted on the supporting frame (2) at the first end portion (21), the first manipulator (3) comprising:
- first gripping means (31) configured to grip the tube (T) and
- first driving means (32) configured to move the first gripping means (31) perpendicularly to the longitudinal direction (X-X),
- one or more second manipulators (4, 5) arranged spaced apart along the longitudinal direction (X-X), each second manipulator (4, 5) comprising:
- second gripping means (41, 51) configured to grip the tube (T),
- second driving means (42, 52) configured to move the second gripping means (41, 51) perpendicularly to the longitudinal direction (X-X),
wherein the first gripping means (31) and the second gripping means (41, 51) are configured to jointly pick and support the tube with the axial direction (A-A) extending along the longitudinal direction (X-X)
**characterized in that:**
- each second manipulator (4, 5) is slidably mounted on the supporting frame (2) along the longitudinal direction (X-X) between the first manipulator (3) and the second end portion (22),
- the second manipulator (4, 5) comprises third driving means (43, 53) configured to drive the second manipulator (4, 5) to let the second manipulator (4, 5) to slide along the longitudinal direction (X-X) on the supporting frame (2) with respect to the first manipulator (3).

2. The tube handling system (1) according to claim 1, wherein the first manipulator (3) is fixedly mounted on the supporting frame (2) along the longitudinal direction (X-X).

3. The tube handling system (1) according to any of the preceding claims comprising a measuring unit (6) configured to measure the length of the tube (T) along the axial direction (A-A) when the tube (T) is supported by at least the first gripping means (31) and the second gripping means (41, 51), the measuring unit (6) comprising at least a first measuring sensor (61) mounted on at least one of the second manipulators (4, 5), the first measuring sensor (61) being configured to detect a first tube end (T1).

4. The tube handling system (1) according to claim 3, wherein the first measuring sensor (61) is mounted on the second gripping means (41) of at least one of the second manipulator (4).

5. The tube handling system (1) according to claim 3 or 4, wherein the measuring unit (6) comprises a second measuring sensor (62) mounded on the supporting frame (2) at the first end portion (21) and configured to detect a second tube end (T2) opposite to the first tube end (T1).

6. The tube handling system (1) according to any of the preceding claims, wherein the first driving means (32) are configured to move the first gripping means (31) along a first moving direction (Y1-Y1) and a second moving direction (Z 1-Z 1), the first moving direction (Y1-Y1) and the second moving direction (Z1-Z1) being perpendicular to the longitudinal direction (X-X).

7. The tube handling system (1) according to any of the preceding claims, wherein the second driving means (42, 52) are configured to move the second gripping means (41, 51) along a third moving direction (Y2-Y2) and a fourth moving direction (Z2-Z2), the third moving direction (Y2-Y2) and the fourth moving direction (Z2-Z2) being perpendicular to the longitudinal direction (X-X).

8. The tube handling system (1) according to any of the preceding claims, wherein the first gripping means (31) and/or the second gripping means (41, 51) comprise:
- a main body (34, 44, 54),
- a support element (35, 45, 55) pivotally mounted on the main body (34, 44, 54) around a rotation axis (R1-R1, R2-R2, R3-R3),
- a pin (36, 46, 56) attached to the support element (35, 45, 55), the pin (36, 46, 56) extending from the support element (35, 45, 55) parallel to the direction defined by the rotation axis (R1-R1, R2-R2, R3-R3),
- pivoting means (37, 47, 57) configured to drive the support element (35, 45, 55) around the rotation axis (R1-R1, R2-R2, R3-R3) to lock the tube (T) supported by the support element (35, 45, 55) between the main body (34, 44, 54) and the pin (36, 46, 56).

9. The tube handling system (1) according to claim 8, wherein the pivoting means (37, 47, 57) comprises a brushless motor (38, 48, 58) kinematically connected to the support element (35, 45, 55) to drive the support element (35, 45, 55) around the rotation axis (R1-R1, R2-R2, R3-R3).

10. The tube handling system (1) according to claim 8 and 9, wherein the support element (35, 45, 55) extends transverse to the direction of action of gravity between a first extremity portion (35a, 45a, 55a) kinematically connected to the pivoting means (37, 47, 57) and a second extremity portion (35b, 45b, 55b) opposite to the first extremity portion (35a, 45a, 55a), the pin (36, 46, 56) being mounted at the second extremity portion (35b, 45b, 55b).

11. The tube handling system (1) according to any of the previous claims, wherein the first gripping means (31) comprises a roller (33) on which the tube slide upon the motion of the at least one of the second manipulator (4, 5) along the longitudinal direction (X-X).

12. The tube handling system (1) according to any of the preceding claims, wherein said one or more second manipulators (4, 5) comprise a plurality of second manipulators (4,5) in sequence arranged along the longitudinal direction (X-X) between the first manipulator (3) and the second end portion (22), the third driving means (43, 53) of each second manipulator (4, 5) being configured to move the respective second manipulator (4, 5) along the longitudinal direction (X-X) independently from the other second manipulators (4, 5).

13. A laser tube working machine (100) comprising a loading station (101) and a working station (102), the loading station (101) being configured to pick a tube (T) and provide the tube (T) to the working station (102), the loading station (101) comprising a tube handling system (1) according to any of the previous claims.
